(19)

Europäisches
Patentamt
European
Patent Office
Office européen
des brevets

(11) **EP 3 371 428 B1**

(12) **EUROPEAN PATENT SPECIFICATION**

(45) Date of publication and mention
of the grant of the patent:
**12.02.2020 Bulletin 2020/07**

(21) Application number: **16790389.7**

(22) Date of filing: **03.11.2016**

(51) Int Cl.:
*F01N 11/00* (2006.01)     *F01N 3/20* (2006.01)
*B60K 15/03* (2006.01)

(86) International application number:
**PCT/EP2016/076608**

(87) International publication number:
**WO 2017/077002 (11.05.2017 Gazette 2017/19)**

(54) **METHOD FOR MONITORING A QUALITY OF A CHEMICAL AGENT IN A FLUID USED IN A SYSTEM OF A MOTOR VEHICLE.**

VERFAHREN ZUR ÜBERWACHUNG DER QUALITÄT EINES CHEMISCHEN STOFFS IN EINER FLÜSSIGKEIT, WELCHE IN EINEM SYSTEM EINES KRAFTFAHRZEUGS EINGESETZT WIRD

PROCÉDÉ DE SURVEILLANCE DE QUALITÉ D'UN AGENT CHIMIQUE DANS UN LIQUIDE UTILISÉ DANS UN SYSTÈME D'UN VÉHICULE AUTOMOBILE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.11.2015 US 201562250226 P
29.01.2016 EP 16153495**

(43) Date of publication of application:
**12.09.2018 Bulletin 2018/37**

(73) Proprietor: **Plastic Omnium Advanced Innovation and Research
1130 Bruxelles (BE)**

(72) Inventors:
• **BUTLER, Josh
MI 48320 (US)**

• **DEDEURWAERDER, Jürgen
1731 Relegem (BE)**
• **BAJA, Mihai
1200 Bruxelles (BE)**

(74) Representative: **LLR
11, boulevard de Sébastopol
75001 Paris (FR)**

(56) References cited:
**EP-A1- 0 423 636     WO-A1-2012/168791
WO-A1-2014/118248     DE-A1-102012 221 828
FR-A1- 2 915 765     FR-A1- 2 997 998
JP-A- 2001 020 724**

**EP 3 371 428 B1**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Field of the Invention

The present invention relates to a method for determining quality of a chemical agent in a fluid. For example, the method applies for the sensing of urea concentration/quality in a urea solution stored in a tank of an SCR system. In another example, the method applies for the sensing of hydrocarbon concentration in a fuel stored in a tank of a motor vehicle.

### Background of the Invention

Different types of chemical solutions can be used on-board a motor vehicle.
For example, such chemical solutions can be fuel (gasoline or diesel), urea solution or ammonia solution. Generally, the quality of these chemical solutions depends on the concentration of a specific chemical agent. For example, for urea solution the chemical agent is urea, and for fuel the chemical agent is at least one hydrocarbon of the fuel composition.
There is a need for a method for monitoring concentration of such chemical agent. For the specific case of SCR it has been proposed a method for monitoring urea concentration and quality in a urea solution stored in a tank of an SCR system. The method is disclosed in the international patent application publication no. WO 2014/118248 A1, in the name of the present applicant. The SCR system comprises a pump driven by a motor and the pressure of which is controlled by a controller. The method comprises the steps of: measuring a parameter value characteristic of the energy transmitted by the motor to the pump (e.g., the pump rotational speed); determining a urea concentration value based upon the parameter value characteristic of the energy transmitted by the motor to the pump. In a particular embodiment of WO 2014/118248 A1, the measured pump rotational speed required to keep the system at a certain desired pressure point (e.g., 5 bar) is compared to a look-up table to determine the urea concentration value. In another particular embodiment of WO 2014/118248 A1, a model of the relationship between pump rotational speed and pump pressure is generated as a function of the measured pump fluid temperature and the pump ageing. However, WO 2014/118248 A1 does not disclose in detail how such a model should be generated or used.
While the monitoring method of WO 2014/118248 A1 provides a great improvement over prior methods, it has been found that the parameters used to determine the urea quality tend to vary under the influence of other variables that are unrelated to the urea quality, such as the temperature of the liquid or ageing effects of the pump, and that these variations are not fully addressed by WO 2014/118248 A1.
Hence, there is still a need for a more accurate and robust method for determining a chemical agent concentration/quality - in particular the urea concentration in the urea solution for the satisfactory operation of an SCR process or the hydrocarbon concentration in fuel for the satisfactory operation of a fuel process.

### Summary of the Invention

According to an aspect of the present invention, there is provided a method for monitoring a chemical agent concentration in a chemical solution stored in a tank of a system of a motor vehicle, said system comprising a pump driven by a motor wherein the pressure of the pump is controlled by a controller, wherein the method comprises the steps of: measuring a plurality of values characteristic of the energy transmitted by the motor to the pump for a corresponding plurality of pump pressure values; determining at least one parameter of a relationship between the energy transmitted by the motor to the pump and applied pump pressure values from said plurality of measured values and said corresponding plurality of pump pressure values; and comparing said at least one parameter to predetermined reference parameters.
It is an advantage of the present invention that it provides a more accurate and robust method for monitoring the chemical agent concentration in the chemical solution for the satisfactory operation of a motor vehicle process, by avoiding reliance on a single measurement of a parameter, the value of which may be affected by other factors than the factor of interest (the chemical agent concentration).
The term "chemical agent" is used with reference to any material with a definite chemical composition and characteristic physicochemical properties.
The chemical agent can be dissolved in any liquid material to form a chemical solution.
In a particular embodiment, the chemical agent is urea. Thus, the chemical solution is a urea solution, preferably an aqueous urea solution.
In another particular embodiment, the chemical agent is ammonia. Thus, the chemical solution is an ammonia solution, preferably an aqueous ammonia solution.
In another particular embodiment, the chemical agent is a mixture of urea and ammonia. Thus, the chemical solution is a mixture of urea and ammonia in a solution, preferably a mixture of urea and ammonia in an aqueous solution.

In another embodiment, the chemical agent is at least one hydrocarbon that is used to formulate a fuel composition such as gasoline or diesel fuel.

From the chemical agent concentration can be deduced any physicochemical property of the chemical agent which depends on the concentration. For example, for fuel system, it can be deduced the octane number or the cetane number of the fuel from the hydrocarbon concentration, depending on the nature of the fuel.

The present invention is *inter alia* on the insight of the inventors that monitoring (estimated) parameters of a parametric model of a physical liquid property, obtained by multiple measurements of the variables used in said model, provides a robust indication of a change of said property. The parameters can be estimated on the basis of a plurality of measurement pairs (energy characteristic and measured or set pump pressure value). Thus, the method according to the present invention could rely on two such measurement pairs. Preferably, the method is performed with more than two measurement pairs. More preferably, the method is performed with five measurement pairs, e.g. ranging between minimum operational pump speed and a pressure value above the nominal operating pressure (typically 500 kPa).

Depending on the type of pump and the regulation thereof, the parameter characteristic of the energy transmitted by the motor to the pump may be the rotational speed (for a rotary pump), the frequency (for a reciprocating pump), the current, the voltage, the torque, ... or any combination of these parameters.

In an embodiment, the method according to the present invention further comprises measuring a plurality of reference values characteristic of the energy transmitted by the motor to the pump for a corresponding plurality of pump pressure values while using a chemical agent concentration having a reference concentration value; and determining said predetermined reference parameters from said plurality of measured reference values and said corresponding plurality of pump pressure values.

It is an advantage of this embodiment that the predetermined reference values can be accurately determined for the individual system in which the operational method will be used, such that the reference parameters adequately take into account individualized variables such as pump characteristics and pump age.

In an embodiment of the method according to the present invention, the determining of the at least one parameter comprises fitting a curve defined by the at least one parameter to the plurality of measured values and the corresponding plurality of pump pressure values.

Curve-fitting is a particularly accurate way to estimate a parameter of a modeled physical response from a series of measurements points.

The pump according to the invention is a fixed displacement rotative pump such as an external gear pump or a gerotor or any other pumps known by the state-of-the-art.

In an embodiment of the present invention, the pump is a gear pump and the parameter value characteristic of the energy transmitted by the motor to the pump is the pump rotational speed value.

The inventors have found that measurements of pressure and pump rotational speed are convenient to carry out, and that these physical variables present an interrelation which lends itself very well to modeling by a parametric curve as required by the present invention.

In a specific embodiment, the curve defined by at least one parameter is a curve of the general formula $f = a \cdot p^b$, wherein $f$ is the pump rotational speed, $p$ is the pressure, and $a$ and $b$ are parameters.

The inventors have found that by using this modeled relationship between pump speed and pressure, it is possible to obtain two parameters that substantially depend on a different set of physical variables. Parameter $a$ is predominantly determined by the liquid quality (chemical agent concentration), temperature, pump characteristics, and pump age. Parameter $b$ is predominantly determined by temperature, pump characteristics, and pump age. Hence, for example, a significant change in the tested value of parameter $a$ relative to the reference value, without a corresponding change in the tested value of parameter $b$, can be seen as an indication of a change in the quality of the chemical solution.

In an embodiment, the method according to the present invention further comprises the steps of: measuring a reference concentration value and a concentration of a currently present chemical solution by means of a sensor; and comparing the evolution between said reference concentration value and said concentration of said currently present chemical solution to the evolution between said reference parameters and said at least one parameter as determined for said currently present chemical solution.

The term "currently present chemical solution" is used to designate the chemical solution that is actually present in the system, with a view to being used in the motor vehicle process, at any given point in time; the term is used to distinguish the chemical solution to be measured from the chemical solution used to obtain the reference values. The currently present chemical solution may be (part of) the same substance as the chemical solution that was actually used to determine the reference value, which has remained in the system for some time and may in the meantime have undergone repeated heating/cooling cycles, partial evaporation, ingress of impurities, ageing, etc.

In this embodiment, the monitoring of the evolution of the parameter values occurs in parallel to the monitoring of a chemical agent concentration measurement obtained by means of a traditional sensor. By comparing the evolution of these two types of concentration assessments, the plausibility of the measurements provided by the sensor can be assessed. In particular, if the concentration measurements provided by the traditional sensor remain constant while the model parameters obtained according to the present invention (i.e. the estimated test parameters) vary significantly, or vice versa, a malfunction of the sensor may be assumed.

In an embodiment, the method according to the present invention further comprises deriving the chemical agent concentration by comparing said at least one parameter to predetermined reference parameters.

In addition to the plausibility assessment of existing sensor, the actual parameters of the model (i.e., parameters obtained by the most recent measurements) may be used to populate a look-up table as proposed in WO 2014/118248, to allow an absolute determination of the chemical agent concentration even outside the range that can be covered by the sensor or when the sensor is not functioning properly.

According to an aspect of the present invention, there is provided a motor vehicle system, comprising: a tank for storing a chemical solution; a pump driven by a motor; a controller for controlling the pressure of the pump; a control module including logic means configured to perform the steps of the method as described above.

According to an aspect of the present invention, there is provided a motor vehicle comprising a system as described above.

The technical effects and advantages of embodiments of the system and the motor vehicle according to the present invention correspond, *mutatis mutandis,* to those of the corresponding embodiments of the method according to the present invention.

## Brief Description of the Figures

These and other technical features and advantages of the present invention will now be described in more detail with reference to the accompanying drawings, in which:

- Figure 1 illustrates how a given gear pump speed reacts to various fluid concentrations throughout a pressure range;
- Figure 2 provides a flow chart of a learning phase of a method according to an embodiment of the present invention;
- Figure 3 provides a flow chart of a method according to an embodiment of the present invention; and
- Figure 4 schematically represents a system according to an embodiment of the present invention.

## Description of Embodiments

As explained previously, the present invention is applied to an SCR system, the purpose of which is to inject a pollution-control liquid into the exhaust gases of an internal combustion engine. Such a system generally comprises at least one tank for storing said liquid and a feed line enabling said liquid to be conveyed to the injector using the pump (placed in this line therefore). One liquid to which the present invention applies particularly well is urea.

The term "urea" is understood to mean any, generally aqueous, solution containing urea. The invention gives good results with eutectic water/urea solutions for which there is a standard quality: for example, according to the standard DIN 70070, in the case of the AdBlue® solution (commercial solution of urea), the urea concentration is between 31.8% and 33.2% (by weight) (i.e., 32.5 +/- 0.7 wt%) hence an available amount of ammonia between 18.0% and 18.8%. The invention may also be applied to the urea/ammonium formate mixtures, also in aqueous solution, sold under the trade name Denoxium™ and of which one of the compositions (Denoxium-30) contains an equivalent amount of ammonia to that of the AdBlue® solution.

As explained in international patent application publication no. WO 2014/118248 A1, in the name of the present applicant, for a given pump and under given operating conditions (for example, maintaining a constant pressure of the system at 5 bar), there is a direct correlation between the operation of the pump required to maintain the desired operating conditions and the urea concentration. A change in the composition of the urea solution (i.e. urea concentration) manifests as a change in viscosity of the urea solution (in certain cases, it can further manifest as a change in density of the operation of the pump required to maintain the desired operating conditions).

An external gear pump, which is one of the pump types frequently used in SCR systems, is a fixed displacement pump with internal leaks. The magnitude of these leaks will depend on the viscosity of the fluid to be pumped, the gap dimensions (this may be determined by the amount of slip between the gears, such as the necessary slip intended for bearing lubrication, slip between gear faces and bearing faces, slip between the gear tip and the pump housing, and slip between meshing gears), and the amount of pressure to be generated. When the injector is closed, the following relation is true:

```
pump speed × displacement = check valve flowrate + leak flowrate
```

Accordingly, measuring the pump speed is an adequate proxy for measuring the leak, which is, for given pump characteristics, indicative of the viscosity of the fluid being pumped.

When the pump speed is measured at different pressure values (i.e. different pressure set points, allowing pump speed and pressure to stabilize), the relationship between the pump speed and the pressure can be modeled. The inventors have found that this relationship can be represented to a satisfactory degree of accuracy by an expression of the form:

$$\texttt{pump speed} = a \times \texttt{pressure}^{b}$$

where $a$ and $b$ are parameters. Given at least two measurement pairs, the parameters $a$ and $b$ may be determined by fitting the measurement pairs to the curve, e.g. with a least squares algorithm.

For aqueous urea solutions, the inventors have further found that the exponent $b$ is independent of urea concentration, while coefficient $a$ is dependent on urea concentration. Embodiments of the present invention are thus based on the insight of the inventors that it is advantageous to determine a given pump's speed/pressure relationship under reference conditions, to store it, and to determine the relationship again at a later point in time for comparison to the stored version.

Advantageously, the characteristic is stored and later compared by simply storing and comparing the parameter(s) that define the characteristic according to an appropriate model, such as the model described above. Advantageously, the parameter(s) may be stored for a range of operating temperatures.

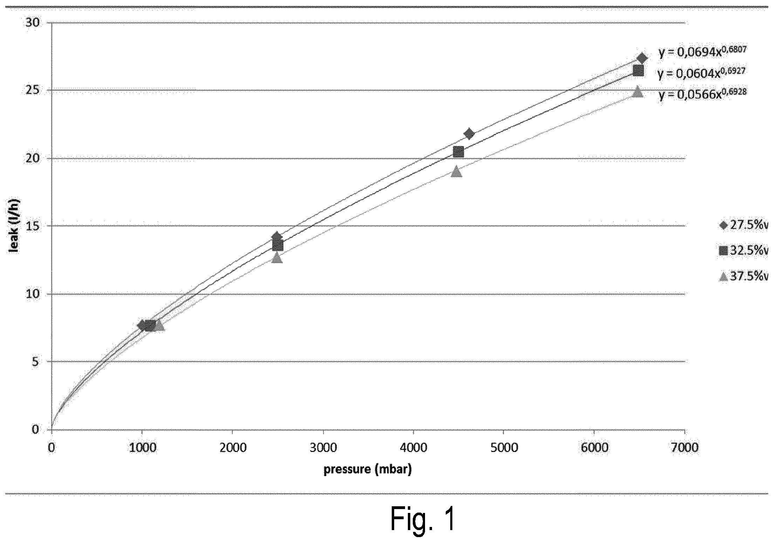

Figure 1 shows how a given gear pump speed reacts to various fluid concentrations throughout a pressure range. According to embodiments of the present invention, a given pump's characteristics are learned throughout an operating temperature range. Once this characteristic has been learned, it is used as a reference to create a ratio to determine if the fluid has changed or not.

Accordingly, if a reference concentration value and a concentration of the currently present urea solution have been obtained by means of a known sensor, the evolution of the concentration measured by the sensor can be compared to the evolution of the parameter(s) defining the speed/pressure characteristic to assess the plausibility of the measurements provided by the sensor.

The "learning" phase, i.e. the acquisition of the speed/pressure relationship under reference conditions, calibrates the method of the present invention to the specific characteristics of an individual pump. This learning is applied repetitively over the lifetime of the system to cope with other time-dependent influences, such as ageing. A validity timer may be used to take into account the ageing effect, and to prompt the system to perform a new "learning" run.

When a pump is initially taken into service, its characteristics tend to change rapidly over the first few hours, as the gears wear out the initial frictions caused by manufacturing tolerances. For this reason, an adequate break-in period has to be observed to obtain a sufficiently stable pump characteristic for application of the method according to the present invention.

The determination of a characteristic can be performed at the beginning of each drive-cycle. Typically, the data obtained by means of the method according to the present invention becomes sufficiently trustworthy (i.e., the pump characteristic becomes sufficiently stable) to reliably diagnose the operation of a known quality sensor in the same vehicle after a number of drive cycles, e.g. 5 drive cycles. Once data from an appropriate number of drive cycles at different initial temperatures are stored new sequences can extrapolate/interpolate to detect large changes in the fluid.

The method described in figure 1 can also be applied in fuel cell application. For example, for fuel cell using a urea solution at a concentration of 55% by weight of urea, the urea concentration is monitored by measuring by means of a sensor and by being compared to the evolution of the parameter(s) defining the speed/pressure characteristic to assess the plausibility of the measurements provided by the sensor.

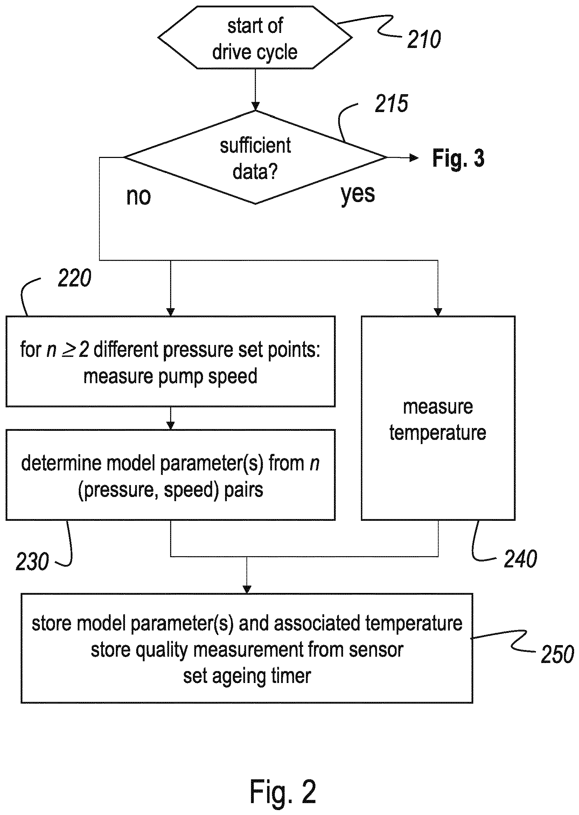

Figure 2 provides a flow chart of a learning phase of a method according to an embodiment of the present invention. Details and examples provided hereinabove apply to this embodiment, and will not always be repeated.

At the beginning of a drive cycle **210,** new measurement pairs are gathered for a given temperature. As long as there is insufficient data to perform a plausibility check or a stand-alone urea concentration assessment, the system is still in a pure "learning" mode; this is schematically represented by the test in block **215.** To obtain new measurement pairs, the temperature is measured **240,** and a predetermined number $n$ (at least 2, preferably 5) of pump speed values are measured for different pressure set points **220.** From these measurement pairs, one or more model parameters (e.g., $a$ and $b$ as defined for the model disclosed above) are determined **230,** by a conventional algorithm such as least-squares fitting. The obtained parameter(s) and associated temperature are stored and the ageing timer for these parameter values is set **250.** At the same time, for the purpose of allowing a plausibility assessment, a quality measurement obtained from an optional independent quality sensor may be stored. The process is repeated at the start of each subsequent drive cycle **210,** until a sufficient number of parameter values for different temperatures (e.g. 5) is available **215.**

While it is possible in principle to work with representative parameter values measure at a single temperature (in which case, measuring and storing the temperature is not strictly necessary), it is preferred to gather sufficient data points to allow interpolation of the parameter values to other temperature values than those at which the parameter values were obtained.

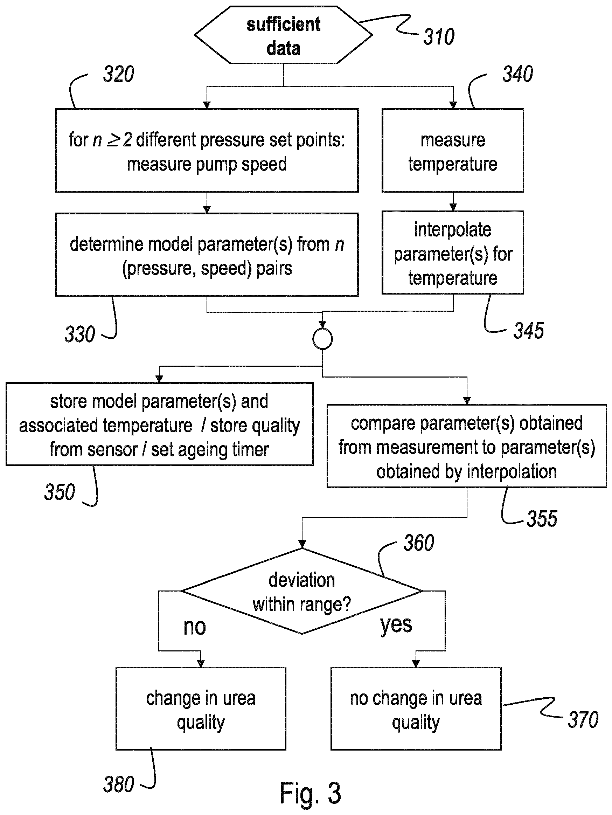

Figure 3 provides a flow chart of a method according to an embodiment of the present invention.

If, at the start of a drive cycle **210,** it is determined **215** that there is sufficient data **310** for a plausibility assessment, new measurement pairs are gathered. To this end, a predetermined number *n* (at least 2, preferably 5) of pump speed values are measured for different pressure set points **320.** From these measurement pairs, one or more model parameters (e.g., a and b as defined for the model disclosed above) are determined **330,** by a conventional algorithm such as least-squares fitting. Meanwhile, the temperature is measured **340,** and the expected value of the model parameter(s) is retrieved by interpolation **345** from the previously stored parameter/temperature pairs (see Figure 2, step **250**). The obtained parameter(s) and associated temperature are stored, and the ageing timer for these parameter values is set **350,** so as to provide a permanent but gradual updating of the "learned" characteristics of the system. Optionally, a quality measurement obtained from an optional independent quality sensor may be stored.

The parameter(s) obtained from the measurements (**320, 330**) is/are compared **355** to the parameter(s) obtained from the interpolation (**345**). If the deviation between the two (sets of) parameters is within predetermined bounds **360,** the system concludes that the urea viscosity (and thus its quality) has not changed **370.** If the deviation between the two (sets of) parameters is outside the predetermined bounds **360,** the system concludes that the urea viscosity (and thus its quality) has changed **380.** In each case, the conclusion regarding the urea quality can be cross-checked with the output of a separate urea quality sensor; if the conclusion reached according to the flow chart of Figure 3 does not corroborate the output of the separate urea quality sensor, this may be indicative of a malfunction of said sensor.

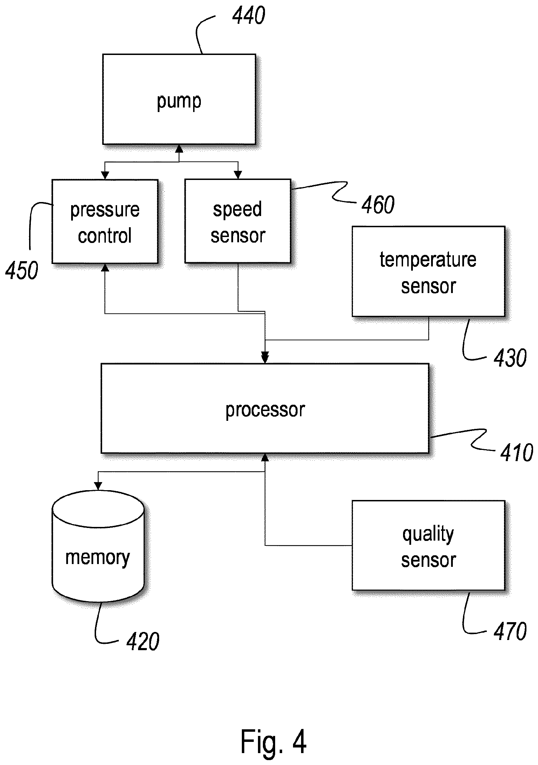

The present invention also pertains to an SCR system (see also Figure 4) comprising a control module or processor **410** configured to carry out the methods described above. The controller **430** may be implemented in dedicated hardware (e.g., ASIC), configurable hardware (e.g., FPGA), programmable components (e.g., a DSP or general purpose processor with appropriate software), or any combination thereof. The same component(s) may also include other functions; in particular it may be part of the vehicle's ECU. A pump **440,** preferably a gear pump, is arranged to convey a urea solution from a tank to an injector (not shown). The pump is arranged to operate at a selected pressure set point (for normal operation, this would be a fixed value such as 500 kPa, for the purpose of the present invention, the pressure set point will be varied); pressure control may be achieved by means of conventional control techniques, such as a control signal with measurement of actual pressure and feedback of an error signal (these details are not shown in the diagram, but collectively indicated by pressure control block **450**). The processor **410** is capable of determining the instantaneous pressure by communication with pressure control block **450.** The processor **410** further has access to the instantaneous speed of the pump, for example by assessing the amount of current being drawn by the pump's motor in the case of a brush-based DC motor or by performing a back-EMF assessment in the case of a BLDC motor (these details are not shown in the diagram, but collectively indicated by speed sensor block **460**). Preferably, the processor **410** has access to the present temperature of the solution being pumped, by means of an adequately positioned temperature sensor **430.** A memory **420** is provided for the storage (see step **250** in Figure 2 and step **350** in Figure 3) and retrieval (see step **345** in Figure 3) of parameter values. The processor **410** may further have access to an optional independent quality sensor **470.**

Similarly, all of these embodiments can be applied for fuel system application. The nature of the fuel (gasoline or diesel) being correlated with the concentration of at least one hydrocarbon being part of the fuel composition can be determined by the method of the invention. Indeed if a reference concentration value and a concentration of the currently present fuel have been obtained by means of a known sensor, the evolution of the concentration measured by the sensor can be compared to the evolution of the parameter(s) defining the speed/pressure characteristic to assess the plausibility of the measurements provided by the sensor.

While the invention has been described hereinabove with reference to separate system and method embodiments, this was done for clarifying purposes only. The skilled person will appreciate that features described in connection with the system or the method alone, can also be applied to the method or the system, respectively, with the same technical effects and advantages. Furthermore, the scope of the invention is not limited to these embodiments, but is defined by the accompanying claims.

**Claims**

**1.** A method for monitoring a chemical agent concentration in a chemical solution stored in a tank of a system of a motor vehicle, said system comprising a pump driven by a motor wherein the pressure of the pump is controlled by a controller, wherein the method comprises the steps of:

- measuring (320) a plurality of values characteristic of the energy transmitted by the motor to the pump for a corresponding plurality of pump pressure values;
- determining (330) at least one parameter of a relationship between the energy transmitted by the motor to the pump and applied pump pressure values from said plurality of measured values and said corresponding plurality of pump pressure values; and
- comparing (355) said at least one parameter to predetermined reference parameters,
- concluding that the chemical agent concentration has changed (370) if the deviation between said at least one parameter and said predetermined reference parameter is outside predetermined bounds (360).

2. The method according to claim 1, further comprising:

- measuring (220) a plurality of reference values characteristic of the energy transmitted by the motor to the pump for a corresponding plurality of pump pressure values while using a chemical agent concentration having a reference concentration value; and
- determining (230) said predetermined reference parameters from said plurality of measured reference values and said corresponding plurality of pump pressure values.

3. The method according to claim 1 or claim 2, wherein said determining (230; 330) of said at least one parameter comprises fitting a curve defined by said at least one parameter to said plurality of measured values and said corresponding plurality of pump pressure values.

4. The method according to any of the preceding claims, wherein the pump (440) is a gear pump and the parameter value characteristic of the energy transmitted by the motor to the pump is the pump rotational speed value.

5. The method according to claim 3, wherein said curve defined by at least one parameter is a curve of the general formula $f = a \cdot p^b$, wherein $f$ is said pump rotational speed, $p$ is said pressure, and $a$ and $b$ are parameters.

6. The method according to any one of the preceding claims, further comprising the steps of:

- measuring a reference concentration value and a viscosity of a currently present chemical solution by means of a sensor; and
- comparing the evolution between said reference concentration value and said concentration of said currently present chemical solution to the evolution between said reference parameters and said at least one parameter as determined for said currently present chemical solution.

7. The method according to any of the preceding claims, further comprising deriving the chemical agent concentration by comparing (350) said at least one parameter to predetermined reference parameters.

8. The method according to any of the preceding claims, wherein the chemical agent is urea.

9. The method according to any of the preceding claims 1-7, wherein the chemical agent is at least one hydrocarbon of a fuel composition.

10. A motor vehicle system, comprising:

a tank for storing a chemical solution;
a pump (440) driven by a motor;
a controller (450) for controlling the pressure of the pump;
a control module (410) including logic means configured to perform the steps of the method according to any of claims 1-9.

11. A motor vehicle comprising the motor vehicle system according to claim 10.

**Patentansprüche**

1. Verfahren zum Überwachen einer Konzentration eines chemischen Mittels in einer chemischen Lösung, die in einem Tank eines Systems eines Kraftfahrzeugs untergebracht ist, wobei das System eine von einem Motor angetriebene Pumpe umfasst, wobei der Druck der Pumpe durch eine Steuerung gesteuert wird, wobei das Verfahren die folgenden Schritte umfasst:

- Messen (320) einer Vielzahl von Werten, die für die vom Motor auf die Pumpe übertragene Energie charakteristisch sind, für eine entsprechende Vielzahl von Pumpendruckwerten;
- Bestimmen (330) eines Parameters einer Beziehung zwischen der von dem Motor zu der Pumpe übertragenen Energie und den angelegten Pumpendruckwerten aus der Vielzahl von gemessenen Werten und der entsprechenden Vielzahl von Pumpendruckwerten; und
- Vergleichen (355) des mindestens einen Parameters mit vorbestimmten Referenzparametern,
- Bestimmen, dass sich die Konzentration des chemischen Mittels geändert hat (370), wenn die Abweichung zwischen dem zumindest einen Parameter und dem vorbestimmten Referenzparameter außerhalb vorbestimmter Grenzen liegt (360).

2. Verfahren nach Anspruch 1, weiterhin umfassend:

- Messen (220) einer Vielzahl von Referenzwerten, die charakteristisch für die von dem Motor auf die Pumpe übertragene Energie sind, für eine entsprechende Vielzahl von Pumpendruckwerten, während eine Konzentration eines chemischen Mittels mit einem Referenzkonzentrationswert verwendet wird; und
- Bestimmen (230) der vorgegebenen Referenzparameter aus der Vielzahl von gemessenen Referenzwerten und der entsprechenden Vielzahl von Pumpendruckwerten.

3. Verfahren nach Anspruch 1 oder Anspruch 2, wobei die Bestimmung (230; 330) des zumindest einen Parameters das Anpassen einer durch den zumindest einen Parameter definierten Kurve an die Vielzahl von gemessenen Werten und die entsprechende Vielzahl von Pumpendruckwerten umfasst.

4. Verfahren nach einem der vorhergehenden Ansprüche, wobei die Pumpe (440) eine Zahnradpumpe ist und der Parameterwert, der für die vom Motor auf die Pumpe übertragene Energie charakteristisch ist, der Pumpendrehzahlwert ist.

5. Verfahren nach Anspruch 3, wobei die durch zumindest einen Parameter definierte Kurve eine Kurve der allgemeinen Formel $f = a \times p^b$) ist, wobei f die Pumpendrehzahl, p der Druck und a und b Parameter sind.

6. Verfahren nach einem der vorhergehenden Ansprüche, das ferner die folgenden Schritte umfasst:

- Messen eines Referenzkonzentrationswertes und einer Viskosität einer aktuell vorhandenen chemischen Lösung mit Hilfe eines Sensors; und
- Vergleichen der Veränderung zwischen dem Referenzkonzentrationswert und der Konzentration der aktuell vorliegenden chemischen Lösung mit der Veränderung zwischen den Referenzparametern und dem mindestens einen Parameter, wie er für die aktuell vorliegende chemische Lösung bestimmt wurde.

7. Verfahren nach einem der vorhergehenden Ansprüche, das ferner die Ableitung der Konzentration des chemischen Mittels durch Vergleich (350) des zumindest einen Parameters mit vorbestimmten Referenzparametern umfasst.

8. Verfahren nach einem der vorhergehenden Ansprüche, wobei das chemische Mittel Harnstoff ist.

9. Verfahren nach einem der vorhergehenden Ansprüche 1-7, wobei das chemische Mittel zumindest ein Kohlenwasserstoff einer Kraftstoffzusammensetzung ist.

10. Kraftfahrzeugsystem, umfassend:

einem Tank zur Aufbewahrung einer chemischen Lösung;
eine von einem Motor angetriebene Pumpe (440);
eine Steuerung (450) zur Steuerung des Drucks der Pumpe;
ein Steuermodul (410) mit einer Logikvorrichtung, die so ausgebildet ist, dass sie die Schritte des Verfahrens nach einem der Ansprüche 1 bis 9 durchführt.

11. Kraftfahrzeug, das das Kraftfahrzeugsystem nach Anspruch 10 umfasst.

**Revendications**

1. Un procédé de surveillance d'une concentration d'agent chimique dans une solution chimique stockée dans un réservoir d'un système d'un véhicule automobile, ledit système comprenant une pompe entraînée par un moteur, la pression de la pompe étant contrôlée par un contrôleur, le procédé comprenant les étapes consistant à :

   - mesurer (320) une pluralité de valeurs caractéristiques de l'énergie transmise par le moteur à la pompe pour une pluralité correspondante de valeurs de pression de pompe ;
   - déterminer (330) au moins un paramètre d'une relation entre l'énergie transmise par le moteur à la pompe et les valeurs de pression de pompe appliquées à partir de ladite pluralité de valeurs mesurées et de ladite pluralité correspondante de valeurs de pression de pompe ; et
   - comparer (355) ledit au moins un paramètre à des paramètres de référence prédéterminés,
   - conclure que la concentration de l'agent chimique a changé (370) si l'écart entre ledit au moins un paramètre et ledit paramètre de référence prédéterminé est hors de limites prédéterminées (360).

2. Le procédé selon la revendication 1, comprenant en outre :

   - le fait (220) de mesurer une pluralité de valeurs de référence caractéristiques de l'énergie transmise par le moteur à la pompe pour une pluralité correspondante de valeurs de pression de pompe tout en utilisant une concentration en agent chimique ayant une valeur de concentration de référence ; et
   - le fait (230) de déterminer lesdits paramètres de référence prédéterminés à partir de ladite pluralité de valeurs de référence mesurées et de ladite pluralité correspondante de valeurs de pression de pompe.

3. Le procédé selon la revendication 1 ou la revendication 2, dans lequel ladite détermination (230 ; 330) dudit au moins un paramètre comprend l'adaptation d'une courbe définie par ledit au moins un paramètre à ladite pluralité de valeurs mesurées et à ladite pluralité correspondante de valeurs de pression de pompe.

4. Le procédé selon l'une quelconque des revendications précédentes, dans lequel la pompe (440) est une pompe à engrenages et la valeur de paramètre caractéristique de l'énergie transmise par le moteur à la pompe est la valeur de vitesse de rotation de la pompe.

5. Le procédé selon la revendication 3, dans lequel ladite courbe définie par au moins un paramètre est une courbe de formule générale $f = a'p^b$, dans laquelle $f$ est ladite vitesse de rotation de la pompe, $p$ est ladite pression et $a$ et $b$ sont des paramètres.

6. Le procédé selon l'une quelconque des revendications précédentes, comprenant en outre les étapes consistant à :

   - mesurer une valeur de concentration de référence et une viscosité d'une solution chimique actuellement présente au moyen d'un capteur ; et
   - comparer l'évolution entre ladite valeur de concentration de référence et ladite concentration de ladite solution chimique actuellement présente à l'évolution entre lesdits paramètres de référence et ledit au moins un paramètre tel que déterminé pour ladite solution chimique actuellement présente.

7. Le procédé selon l'une quelconque des revendications précédentes, comprenant en outre le fait de dériver la concentration en agent chimique par le fait (350) de comparer ledit au moins un paramètre à des paramètres de référence prédéterminés.

8. Le procédé selon l'une quelconque des revendications précédentes, dans lequel l'agent chimique est l'urée.

9. Le procédé selon l'une quelconque des revendications 1 à 7 précédentes, dans lequel l'agent chimique est au moins un hydrocarbure d'une composition formant carburant.

10. Un système de véhicule automobile, comprenant :

   un réservoir pour le stockage d'une solution chimique ;
   une pompe (440) entraînée par un moteur ;
   un contrôleur (450) pour commander la pression de la pompe ;
   un module de commande (410) comprenant un moyen logique configuré pour mettre en œuvre les étapes du procédé selon l'une quelconque des revendications 1 à 9.

**11.** Un véhicule à moteur comprenant le système de véhicule à moteur selon la revendication 10.

Fig. 1

Fig. 2

sufficient
data — *310*

*320*

for *n ≥ 2* different pressure set points:
measure pump speed

*340*

measure
temperature

determine model parameter(s) from *n*
(pressure, speed) pairs

interpolate
parameter(s) for
temperature

*330*

*345*

store model parameter(s) and
associated temperature / store quality
from sensor / set ageing timer

compare parameter(s) obtained
from measurement to parameter(s)
obtained by interpolation

*350*

*355*

*360*

deviation
within range?

no          yes

change in urea
quality

no change in urea
quality — *370*

*380*

Fig. 3

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014118248 A1

- WO 2014118248 A